(19) **Europäisches Patentamt**
**European Patent Office**
**Office européen des brevets**

(11) **EP 3 168 962 A1**

(12) **EUROPEAN PATENT APPLICATION**

(43) Date of publication:
17.05.2017 Bulletin 2017/20

(51) Int Cl.:
*H02K 1/16* (2006.01)          *H02K 1/20* (2006.01)

(21) Application number: 15193900.6

(22) Date of filing: 10.11.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft**
**80333 München (DE)**

(72) Inventors:
• **Kaushal, Vishal**
**122001 Gurgaon, Haryana (IN)**
• **Singh, Harpreet**
**141003 Ludhiana, Punjab (IN)**

(74) Representative: **Patentanwaltskanzlei WILHELM & BECK**
**Prinzenstraße 13**
**80639 München (DE)**

(54) **A STATOR CORE FOR AN ELECTROMECHANICAL MACHINE**

(57)    To create a stator core for an electromagnetic machine having a plurality of sheets (2) clamped against each other by a clamping means (4), along an axis (3) of the stator core and at least one spring structure (13), which precludes the loss of compression force between the sheets (2) of the stator core, it is suggested, the at least one spring structure (13) being arranged in contact with at least one of the plurality of sheets (2), the spring structure extending axially outward, along the axis (3), from one sheet to abut an adjacent sheet.

FIG 4

400A          400B          13

EP 3 168 962 A1

**Description**

The present invention relates to a stator core for an electromagnetic machine having a plurality of sheets axially clamped against each other by a clamping means, and at least one spring structure.

Such a stator core is already disclosed in US 4227109. The stator core disclosed therein has ferromagnetic sheets that are axially clamped to form a single stator block. The sheets are held by through-bolts and building bolts that clamp the sheets to end plates of the stator block. The building bolts and through-bolts exert compression force along the axis of the stator core to provide the clamping action. This compression force applied along the axis of the stator core is known as axial compression force. A spring is provided on each of the building bolts to ensure uniform expansion of the stator core, such that the axial compression is maintained on the sheets. However, when the stator core is subject to continuous thermal expansion and contraction, the spring provides compression force only at the ends of the stator block. Since the axial compression force is only at the ends of the stator block, the axial compression force is not uniformly maintained through the entire stator block and therefore, the prior art does not efficiently solve the problem of looseness in the stator core.

Other prior art documents address the problem of stator core looseness by wedging the core with epoxy/glass shims. Another method is to re-torque the through-bolts and building bolts of the stator core. Further, in case of severe damage of the stator core, the stator core is partially re-stacked by replacing the damaged sheets.

The prior art EP0669694 A1 discloses a stator core that is designed to address the thermally induced relative movements that displace a stator winding from an axis of the stator core. EP0669694 A1 discloses providing a leaf spring and spring means between an outer ring and an end plate of the stator core. The said leaf springs, together with spring means, produce a sufficiently high preloading force along the axis of the stator core, which compensates for the thermally induced axial displacement of stator winding with respect to the stator core. However, the leaf spring and spring means do not address the loss of compression force between the sheets of the stator core, rather addresses the problem of displacement of the stator windings.

Therefore, it is an object of the present invention to provide a stator core of the aforementioned kind that precludes the loss of compression force between the sheets of the stator core.

The invention achieves this object in that the stator core is designed with the at least one spring structure being arranged in contact with at least one of the plurality of sheets, the spring structure extending axially outward, i.e in the direction of an axis of the stator core, from one sheet to abut an adjacent sheet.

According to the present invention, a stator core for an electromechanical machine comprising a plurality of sheets and at least one spring structure is provided. The sheets are stacked along the axis, which is an imaginary line that extends though the geometric center of the stator core. Each of the sheets, for example, is a laminated sheet that is made up of thin electrical grade steel plate. The form of the sheets is optional; the sheets have either a flat or an irregular façade. However, according to the present invention, the sheets are stackable.

Further, the stacked sheets are axially clamped against each other by compressing the sheets together. The sheets are compressed together by a clamping means that hold the sheets together. According to a preferred example, the clamping means do not include elastic elements, such as a spring element. The clamping means press the sheets together and thereby generate a compression force. The compression force generated by the clamping means is maintained on the sheets along the axis of the stator core and is referred to as axial compression force.

In order to maintain axial compression force, according to the invention it is proposed that the spring structure is arranged in contact with one or more sheets, such that the spring structure provides axial spring action, i.e. along the axis of the stator core. The spring structure extends axially outward from one sheet to abut an adjacent sheet. Since the spring action is along the axis of the stator core, the spring structure transmits axial compression force on the adjacent sheet. The spring structure is advantageous as it reduces the effect of stator core looseness by pressurizing the sheets against each other along the axis of the stator core.

According to an embodiment of the present invention, the sheets are segmented with each segment having slots for accommodating conductors of the stator winding that consists of a plurality of turns of wire coils, which is used to generate the magnetic flux. In large machines, the circumference of the sheets is bigger and hence it is advantageous to segment the sheets to reduce the cost of assembling the stator winding in the sheets. Generally, the sheets are segmented into 10-24 segments depending on the pole configuration of the machine. For example, in a lower pole configuration, such as a 2 pole configuration, the sheets are divided into 10 segments since the circumference of the sheets are comparatively smaller. In higher pole configuration of 4 poles, the sheets have a larger circumference and therefore, the sheets are divided into 24 segments.

According to another embodiment of the present invention, the sheets are provided with insulation coating. The sheets are insulated to prevent current losses due to the induced magnetic flux. Numerous types of organic and inorganic insulation materials can be applied to the core laminations as insulation coating. Typically, insulation coating includes melamine coating, phenolic coating, polyester coating, epoxy resin etc. Further, the sheets are grounded, to ensure that circulating currents do not occur. Therefore, it is advantageous to provide insulation coating and grounding to avoid flow of localized current and overheating of the sheets.

According to a preferred embodiment of the present invention, the spring structure includes a base member arranged in contact with one or more sheets. Further, the spring structure includes an elastic element that extends from the base member and abuts the adjacent sheet. The elastic element is fixed to the base member, which in turn is secured to the sheets. In certain embodiments, the base member is a portion of the sheet on which the elastic element is fixed.

The elastic member of the spring structure extends outward from the base member to abut the adjacent sheet. The elastic member is flexible and is capable of providing spring action along the axis of the stator core. For example, when the axial compression force provided by the clamping means reduces, the elastic member transmits the compression force on the sheets in the axial direction. Therefore, the spring structure advantageously maintains the axial compression force between the sheets even with prolonged use of the stator core.

In an example embodiment, the spring structure can be provided on a vent plate provided between the sheets. Typically, the vent plates including vent fingers are arranged between the sheets. The vent fingers are secured to the vent plate to define a ventilation passage for circulation of a cooling gas through the stator core. In an example embodiment, the vent fingers are mechanically riveted to the vent plates and are angularly displaced with respect to each other to define flow passages of variable cross-sectional area to achieve efficient flow of cooling air through the stator core.

In the present example, the vent fingers are advantageously configured to also act as the spring structure. Accordingly, each vent finger is configured to include both the base member and the elastic element. For example, the vent finger has a rippled profile, which comprises the base member and the elastic element. The base member is fixed to the vent plate, while the elastic element extends outward from the base member. The elastic element extends along the axis of the stator core to abut the sheet adjacent to the vent plate. Consequently, the elastic member provides spring action in the axial direction and thereby, transmits the axial compression force on the sheets. When the axial compression force provided by the clamping means reduces, the elastic member of the vent finger transmits the compression force on the sheets in the axial direction. Therefore, the present invention advantageously enhances the function of the existing vent fingers, such that the vent fingers are capable of maintaining the axial compression force between the sheets even with prolonged use of the stator core. Additionally, the present invention achieves the above advantage without extensively changing the design of the vent fingers.

According to an embodiment of the present invention, the elastic element of the spring structure is of a curved shape. The elastic element abuts the adjacent sheet on a convex side of the elastic element. As a result, the elastic element transmits the compression force to the adjacent sheet via the convex side. The curved shape is advantageous as it enables the elastic element to retain its elasticity even when the high clamping forces are applied on the sheets. Further, the curved shape of the elastic element ensures that the compression force exerted on the sheets is evenly distributed. According to another preferred embodiment of the present invention, the elastic element comprises a curved finger. The curved finger includes a base member end and a free end opposite to the base member end. The base member end is connected to the base member and the free end meets the adjacent sheet on a convex side of the curved finger. The curved fingers become flat during initial clamping/tightening of the sheets using the clamping means. When the stator core loses its initial tightening, inter-laminar reaction pressure between the sheets decreases. The reduced tightening allows the curved fingers to regain the initial curved shape. This flexible nature of the curved fingers facilitates transmittal of axial compression force on the sheets, thereby minimizing the effect of the reduction of the inter-laminar reaction pressure.

In an example embodiment, the curved fingers are arranged in pairs to form a divided semi circular structure. The divided semi circular structure ensures that the clamping force provided by the clamping means is absorbed evenly by two curved fingers instead of one curved finger. Thus, the above mentioned arrangement of curved fingers is capable of absorbing higher clamping force.

According to another embodiment of the present invention, the spring structure is attached to one or more sheets. The sheets are designed with the spring structure being incorporated on one or both sides of the sheets. In certain embodiments, the spring structure is attached to the sheets by a mechanical riveting connection. The incorporation of the spring structure on the sheets is advantageous because the problem of looseness in the stator core is addressed at the design level, without significant changes in the design of the stator core.

According to an embodiment of the present invention, the spring structure is provided on a rigid, non-magnetic plate of substantially the same configuration as the sheets. Since the spring structure is provided in between the sheets, it is subjected to very high temperature and pressure generated by the induced magnetic flux. Therefore, it is advantageous to place the spring structure on a plate with high rigidity. Further, to ensure that the induced magnetic flux has no effect on the spring structure, it is preferred that the spring structure and the plate are not magnetic in nature.

Additionally, the plate is provided with slots in synchronization with the slots on the sheets. The slots in the plate are used for accommodating the stator winding and the clamping means. In an example embodiment, the rigid non-magnetic plate is the vent plate provided between the sheets and the spring structure is the vent finger.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

Figure 1 is a perspective view of a stator core in accordance with prior art;
Figure 2 is a top view of a vent plate in accordance with prior art;
Figure 3 is a perspective view of a vent plate in accordance with the present invention;
Figure 4 is a schematic representation of un-deformed and deformed configurations of a spring structure in accordance with the present invention;
Figure 5 is a stiffness model for the stator core as illustrated in Figure 1; and
Figure 6 is a stiffness model for a stator core in accordance with the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

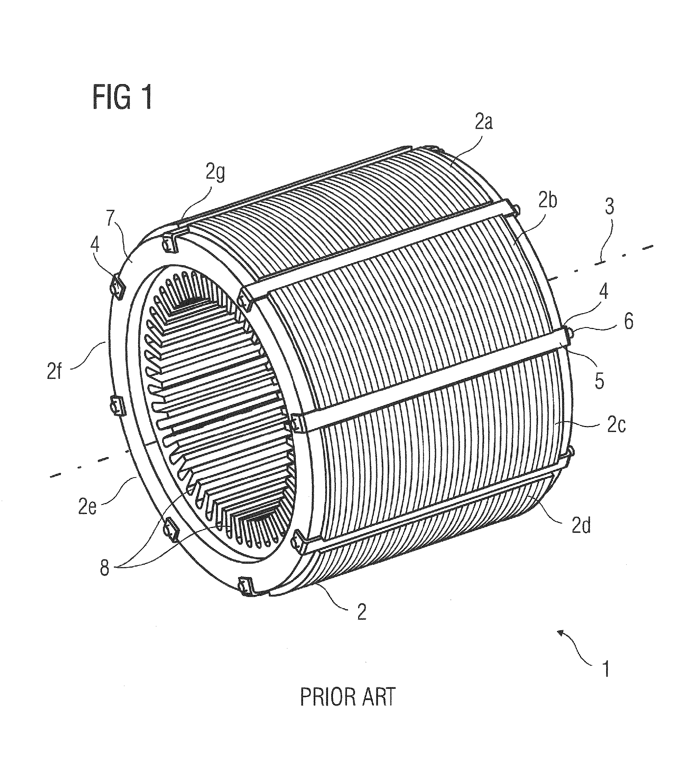

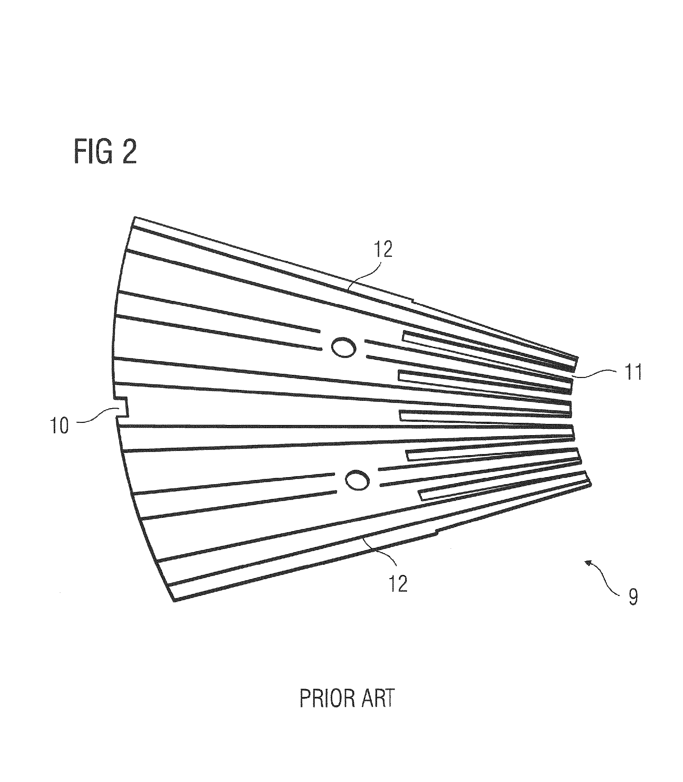

Figure 1 illustrates a perspective view of a stator core 1 in accordance with prior art. The stator core 1 is formed from a multiple of sheets 2 clamped against each other in the direction of an axis 3 of the stator core 1. As shown in Figure 1, the axis 3 is the imaginary line that extends though the center of the stator core. Further, the stator core comprises a clamping means 4 that includes a clamping bar 5 and a clamping bolt 6, which clamp the sheets 2 sheets together. Also, the sheets are clamped to end plates 7 of the stator core 1 using the clamping bar 4 and clamping bolt 5. The clamping means 4 in conjunction with the end plates 7 exert a clamping force or tightening force on the sheets along the axis 3 of the stator core 1. Each of the sheets 2 includes multiple segments 2a-2g. Furthermore, each of the sheets 2 is insulated by providing an insulating coating. Additionally, the sheets 2 are provided with winding slots 8 for accommodating conductors of a stator winding (not shown in Figure 1). Apart from the sheets 2, the stator core 1 also comprises vent plates (shown in Figure 2) that are provided in between the sheets to provide a ventilation passage between the sheets.

As explained earlier, during operation, the stator core 1 experiences thermal expansion and contraction that results in reduction in the clamping force exerted on the sheets 2. The reduction in the clamping force in the stator core 1 causes vibrations in the sheets 2, which in turn damages the insulation on the sheets.

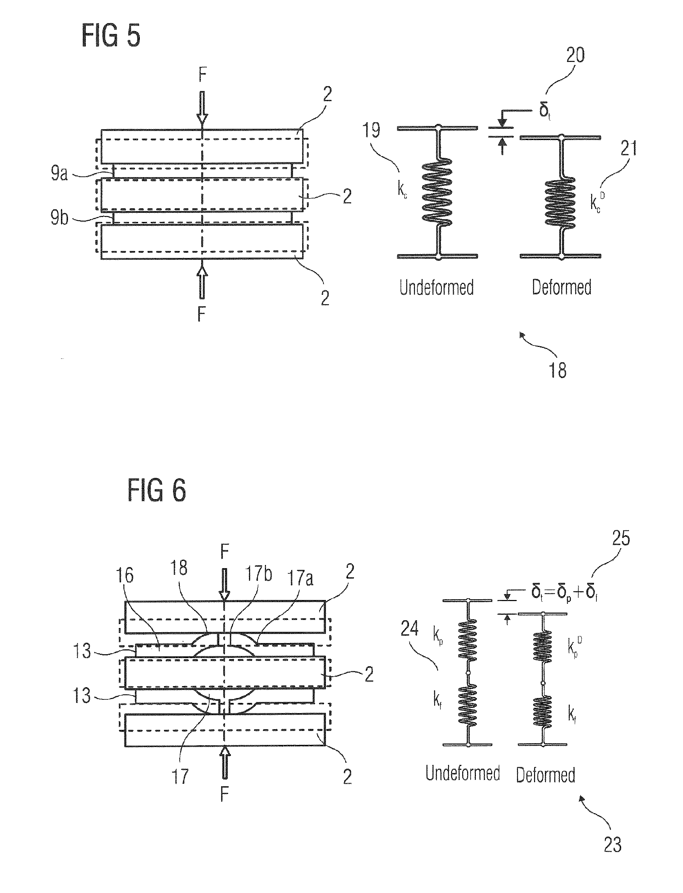

Figure 2 illustrates a top view of a vent plate 9 in accordance with prior art. The known vent plate 9 is provided between adjacent sheets 2 of the stator core 1 to provide ventilation passages in the stator core 1. The known vent plate 9 has the same configuration as that of the sheets 2. Accordingly, the known vent plate 9 includes slot 10 to receive the clamping bar 4 and winding slots 11 for accommodating conductors of the stator winding. Further, the known vent plate 9 includes several vent fingers 12, which are ridges that extend lengthwise on the known vent plate 9 as parallel straight lines. The known vent fingers 12 do not impart any compression force on the adjacent sheets and therefore are unable to compensate for the looseness between the sheets. Figure 5, described later, explains in detail the reduced flexibility of the stator core 1 in comparison with the present invention, using a stiffness model.

In the present invention a spring structure 13 is provided in contact with one or more sheets 2 to compensate for the looseness in the sheets 2.

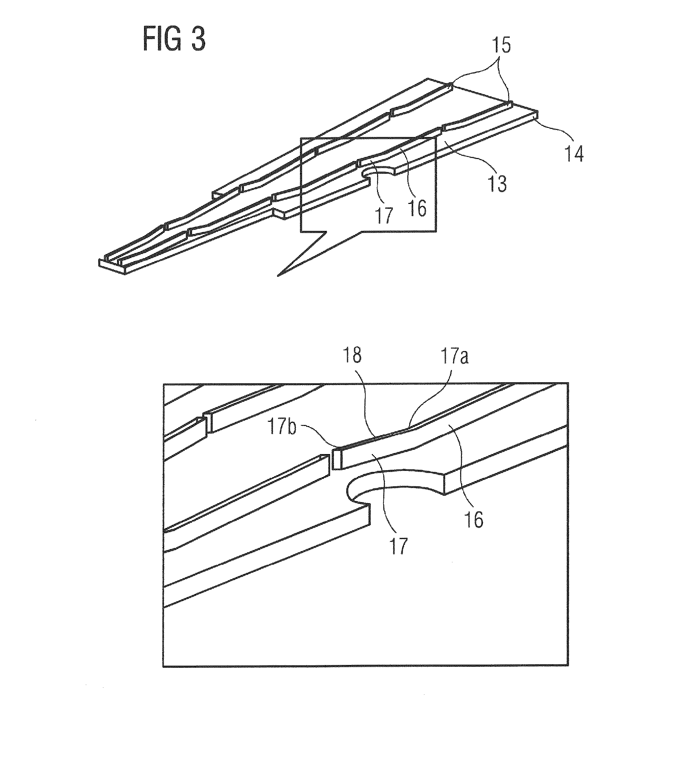

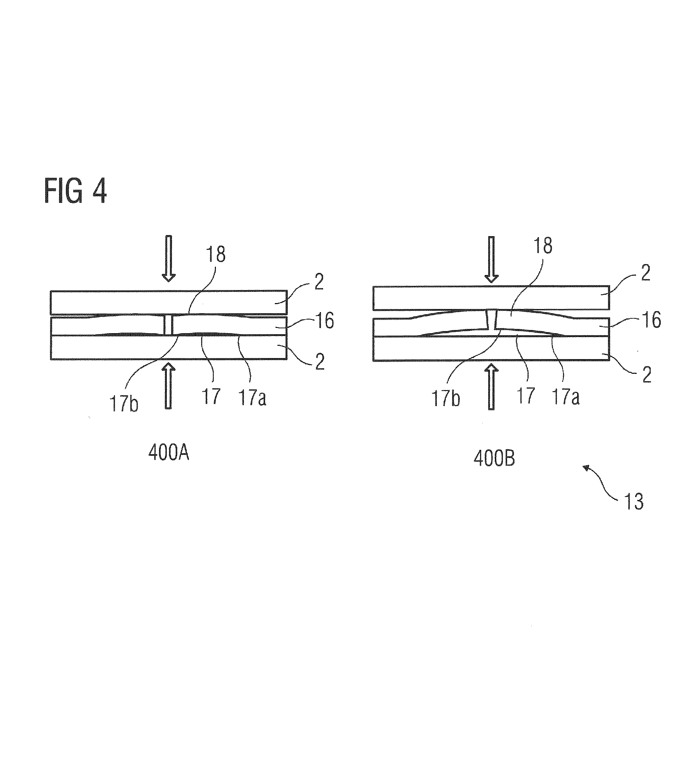

In Figure 3, the spring structure 13 is embodied on a vent plate 14. Figure 3 illustrates a perspective view of the vent plate 14 in accordance with the present invention. The vent plate 14 includes the spring structure 13 in the form of several vent ridges 15 that extend lengthwise on the vent plate 14. Each of the ridges 15 in turn includes a base member 16 and a flexible curved finger 17. The curved finger 17 includes a base member end 17a and a free end 17b opposite to the base member end 17a. The free end 17b abuts the adjacent sheet on a convex side 18 of the curved finger 17. The curved finger 17 transmits axial compression force on the adjacent sheet though the convex side 18 when the clamping force weakens, as explained in Figure 4.

Figure 4 is a schematic representation of deformed and un-deformed configurations of the spring structure 13 in accordance with the present invention. In the example embodiment, the spring structure 13 is a portion of the vent ridge 15 that comprises the base member 16 and the curved finger 17.

According to Figure 4, the deformed configuration of the spring structure 13 is disclosed in 400A and the un-deformed configuration of the spring structure 13 is disclosed in 400B. The spring structure 13 is deformed due to the initial tightening or clamping of the sheets using clamping bars and clamping bolts. The initial tightening causes the curved finger 17 to flatten and thereby loses its curvature. The extent of the flattening depends on the geometry of the curved finger 17 and the initial tightening pressure. As the initial tightening pressure reduces with usage of the stator core, the curved finger 17 regains its curvature and applies force on the adjacent sheet along the axis of the stator core. The force exerted by the curved finger pressurizes the adjacent sheet against another sheet and thereby maintaining the compression force between the sheets. Thus, the curved finger 17 minimizes the effect of the reduction of the initial tightening pressure on the sheets. Figure 6, described later, explains the improved flexibility of the stator core in accordance with the present invention as compared to the stator core 1 disclosed in prior art.

Figure 5 illustrates a stiffness model 18 for the stator core 1 according to prior art. Figure 5 shows an arrangement of the known vent plates 9 and sheets 2 to signify the stator core 1. Also, in the figure, the stator core 1 is represented as a spring with stiffness quotient $k_c$ 19, which is comparable to stiffness of sheets. Under initial tightening force "F', the stator core 1 deforms by $\delta_t$, which is shown using the reference numeral 20. Further, due to thermal ageing, the stiffness quotient $k_c$, decreases to stiffness quotient $k_c^D$, shown by the reference numeral 21. Due to the decrease in stiffness quotient $k_c$, the initial tightening force 'F' decreases to $\Delta F$, which is determined as $\Delta F = \left( k_c - k_c^D \right) \delta_t$. To reduce the effect of the decrease in stiffness quotient $k_c$, the stator core 1 is provided with the spring structure 13 in accordance with the present invention.

Figure 6 is a stiffness model 23 for a stator core in accordance with the present invention. The stator core in accordance with the present invention includes the spring structure 13 in between the sheets 2 of the stator core 1. The stiffness quotient 24 of the stator core is determined by calculating the sum of the stiffness of sheets $k_p$ and stiffness of the spring structures $k_f$. Further, the initial tightening force 'F' applied on the stator core is calculated as $F=k_p\delta_p=k_f\delta_f$, where $\delta_p$ and $\delta_f$ represent the extent of deformation of the sheets 2 and the spring structures 13, respectively. Furthermore, the total deformation 25 in the stator core according to the present invention can be determined as $\delta_t=\delta_p+\delta_f$.

With time the stiffness quotient of the sheets $k_p$ reduces to $k_p^D$ and accordingly, the reduction in initial tightening force is calculated as $\Delta F = \left( k_p - k_p^D \right) \delta_p$. However, due the initial tightening force, high reaction force is built in the curved fingers 17 of the spring structures 13. Consequently, when the initial tightening force reduces the curved fingers 17 exert pressure on the sheets 2 till the reaction force in the curved fingers and the sheets is balanced. Therefore, the reduction in the stiffness quotient of the sheets $k_p$ is compensated by the high reaction force is built in the curved fingers 17. As a result, the actual decrease in F, i.e. $\Delta F_{actual}$ is lesser as compared to the calculated $\Delta F$ for the stator core 1.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

**Claims**

1.    A stator core for an electromagnetic machine, having a plurality of sheets (2) clamped against each other by a clamping means (4); and
at least one spring structure (13), **characterized by** the at least one spring structure (13) being arranged in contact with at least one of the plurality of sheets (2), the spring structure (13) extending axially outward from one sheet (2) to abut an adjacent sheet (2).

2.    The stator core according to claim 1, wherein each of the plurality of sheets (2) is segmented (2a-2g) with each segment being provided with slots (8) for accommodating conductors of a stator winding.

3.    The stator core according to claim 1 or 2, wherein each of the plurality of sheets (2) is provided with insulation coating.

4.    The stator core according one of the aforementioned claims, wherein the spring structure (13) comprises:

at least one base member (16) arranged in association with the plurality of sheets; and
at least one elastic element (17) extending from the at least one base member (16) to abut the adjacent sheet (2).

5.    The stator core according to claim 4, wherein the at least one elastic element (17) extends as a curve from the at least one base member (16) to abut the adjacent sheet on a convex side (18) of the curve of the at least one elastic element.

6.    The stator core according to claim 4 or 5, wherein the at least one elastic element (17) comprises at least one curved finger having a base member end (17a) and a free end (17b) opposite to the base member end.

**7.** The stator core according to claim 1, wherein the spring structure (13) is attached on at least one of the plurality of sheets (2).

**8.** The stator core according to claim 1, wherein the spring structure (13) is provided on a rigid, non-magnetic plate (14) of substantially the same configuration as the plurality of sheets.

FIG 1

PRIOR ART

FIG 2

PRIOR ART

FIG 3

FIG 4

400A

400B

13

FIG 5

FIG 6

Europäisches Patentamt
European Patent Office
Office européen des brevets

**EUROPEAN SEARCH REPORT**

Application Number

EP 15 19 3900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 493 414 A (MONTFORD MORRISON) 3 January 1950 (1950-01-03) * figures 1,2,5 * * column 1, lines 4-30 * * column 2, lines 14-40 * * column 2, line 57 - column 3, line 30 * * column 4, lines 24-35 * * claim 1 * | 1-8 | INV. H02K1/16 H02K1/20 |
| A | EP 0 039 049 A1 (ALSTHOM ATLANTIQUE [FR]) 4 November 1981 (1981-11-04) * abstract * * page 2, lines 20-35 * * page 3, lines 26-32 * * claim 1 * * figures 1,2 * | 1-8 | |
| A | BE 382 500 A (RÉNÉ VOLET) 31 October 1931 (1931-10-31) * figures 1-3 * * page 1, line 1 - page 2, line 8 * * page 4, lines 1-1 * * page 5, lines 8-12 * | 1-8 | |
| A | WO 99/19969 A1 (ASEA BROWN BOVERI [SE]; LARSSON BERTIL [SE]; JONAS IVAN [SE]; ROTHMAN) 22 April 1999 (1999-04-22) * abstract * * figure 2 * * page 12, lines 16-26 * | 1-8 | TECHNICAL FIELDS SEARCHED (IPC) H02K |
| A,D | EP 0 669 694 A1 (ABB MANAGEMENT AG [CH]) 30 August 1995 (1995-08-30) * abstract * * figures 2,3 * * page 4, lines 12-34 * | 1-8 | |

The present search report has been drawn up for all claims

| Place of search | Date of completion of the search | Examiner |
|---|---|---|
| Munich | 11 May 2016 | de la Tassa Laforgue |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 3900

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2016

| Patent document cited in search report | | Publication date | Patent family member(s) | | Publication date |
|---|---|---|---|---|---|
| US 2493414 | A | 03-01-1950 | NONE | | |
| EP 0039049 | A1 | 04-11-1981 | AR | 222764 A1 | 15-06-1981 |
| | | | BR | 8102620 A | 19-01-1982 |
| | | | CA | 1155895 A | 25-10-1983 |
| | | | DE | 3163959 D1 | 12-07-1984 |
| | | | EP | 0039049 A1 | 04-11-1981 |
| | | | ES | 8202993 A1 | 16-05-1982 |
| | | | FR | 2481853 A1 | 06-11-1981 |
| | | | PT | 72952 A | 01-05-1981 |
| | | | US | 4362960 A | 07-12-1982 |
| BE 382500 | A | 31-10-1931 | NONE | | |
| WO 9919969 | A1 | 22-04-1999 | AU | 9656898 A | 03-05-1999 |
| | | | BR | 9813030 A | 15-08-2000 |
| | | | CA | 2306929 A1 | 22-04-1999 |
| | | | CN | 1272245 A | 01-11-2000 |
| | | | EP | 1023760 A1 | 02-08-2000 |
| | | | NO | 20001827 A | 07-04-2000 |
| | | | PL | 339770 A1 | 02-01-2001 |
| | | | WO | 9919969 A1 | 22-04-1999 |
| | | | ZA | 9809333 A | 28-04-1999 |
| EP 0669694 | A1 | 30-08-1995 | BR | 9500774 A | 07-11-1995 |
| | | | CN | 1110023 A | 11-10-1995 |
| | | | CZ | 9500515 A3 | 15-11-1995 |
| | | | DE | 4406400 A1 | 31-08-1995 |
| | | | EP | 0669694 A1 | 30-08-1995 |
| | | | HR | P950087 A2 | 31-12-1996 |
| | | | JP | H07274425 A | 20-10-1995 |
| | | | RU | 95104378 A | 27-11-1996 |
| | | | US | 5485050 A | 16-01-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4227109 A
- EP 0669694 A1